# EUROPÄISCHE PATENTSCHRIFT

(11) **EP 3 424 788 B1**
(45) Veröffentlichungstag und Bekanntmachung des Hinweises auf die Patenterteilung: **20.07.2022**
(21) Anmeldenummer: 18163100.3
(22) Anmeldetag: 21.03.2018
(51) Int. Cl.: B60T 8/17

(54) **LANDWIRTSCHAFTLICHES ARBEITSFAHRZEUG**
AGRICULTURAL WORK VEHICLE
VÉHICULE DE TRAVAIL AGRICOLE

(30) Priorität: 04.07.2017 DE 102017114917
(43) Veröffentlichungstag der Anmeldung: 09.01.2019
(73) Patentinhaber: CLAAS Selbstfahrende Erntemaschinen GmbH, 33428 Harsewinkel (DE)
(72) Erfinder: Silies, Andreas, 48488 Emsbüren (DE); Lahmann, Dirk, 33790 Halle/Westf. (DE)
(74) Vertreter: CLAAS Gruppe

(56) Entgegenhaltungen:
- EP-A1- 0 563 619
- EP-A2- 1 258 406
- EP-B1- 1 870 375
- DE-A1-102014 105 758

## Beschreibung

Die vorliegende Erfindung betrifft ein landwirtschaftliches Arbeitsfahrzeug mit einer Vorrichtung zur Aufnahme eines Anbaugerätes und einer Einrichtung zur Aufnahme von Kontergewichten, sowie einem zumindest zwei Achsen umfassenden Fahrwerk, einer Vorderachse und einer Hinterachse, an denen Drehmomentübertragungsmittel angeordnet sind, mit einem durch eine Steuereinrichtung ansteuerbaren Bremssystem, welches wenigstens eine auf zumindest eine der Achsen bzw. die daran angeordneten Drehmomentübertragungsmittel einwirkende Bremseinrichtung umfasst. Weiterhin betrifft die Erfindung ein Verfahren zum Betreiben eines landschaftlichen Arbeitsfahrzeuges gemäß dem Oberbegriff des Anspruchs 11.

Die EP 2 009 329 B1 beschreibt eine Erntemaschine mit einer Steuereinrichtung zur Regelung hydraulischer Antriebseinheit eines Fahrantriebes in Abhängigkeit von statischen und dynamischen Maschinenparametern. Einen statischen Maschinenparameter bildet dabei das jeweilige an der Erntemaschine angeordnete Vorsatzgerät, welches mit Angabe der Typbezeichnung und Ausstattung in die Steuereinrichtung eingeht. Die wechselbaren Vorsatzgeräte bestimmen die Rad- bzw. Achslast an den Antriebsrädern und nehmen somit Einfluss auf die Traktion und das Schlupfverhalten der Antriebsräder. Die statischen und dynamischen Maschinenparameter werden herangezogen, um das Schluckvolumen der hydraulischen Antriebseinheiten anzupassen, um die Traktion zu optimieren und das Auftreten von Schlupf zu verhindern.

Aus der DE 10 2014 105 758 A1 ist ein landschaftliches Arbeitsfahrzeug gemäß dem Oberbegriff des Anspruches 1 bekannt. Das als Traktor ausgeführte landwirtschaftliche Arbeitsfahrzeug verfügt über front-und heckseitige Geräteschnittstellen zum Anbau unterschiedlicher Arbeitsgeräte und/oder Ballastierungen als Kontergewichte. Der Traktor weist weiterhin ein Fahrwerk mit einer Vorderachse und einer Hinterachse auf, an denen Räder als Drehmomentübertragungsmittel angeordnet sind. Zum Abbremsen des Traktors ist ein Bremssystem vorgesehen, welches auf die Räder einwirkende Bremseinrichtungen aufweist. Das Bremssystem wird durch eine Steuereinrichtung angesteuert. Die Ansteuerung des Bremssystems erfolgt in Abhängigkeit von an den Achsen in Vertikalrichtung angreifenden statischen und dynamischen Fahrwerkskräften, welche von einer Sensoranordnung erfasst werden. Die Steuereinrichtung errechnet aus den erfassten Fahrwerkskräften eine Verteilung der auftretenden Achskräfte, um aus der errechneten Verteilung für die Bremseinrichtungen eine Vorgabe hinsichtlich der Verteilung der von dem Bremssystem bereitgestellten Bremskräfte abzuleiten. Die Erfassung der statischen und dynamischen Fahrwerkskräfte erfordert die Anordnung von Rad- und Achssensoren, um in Abhängigkeit von den Fahrwerkskräften den zur Verfügung stehenden Bremsdruck zu verteilen.

Somit ist es die Aufgabe der Erfindung, ein landwirtschaftliches Arbeitsfahrzeug der eingangs genannten Art sowie ein Verfahren zum Betreiben eines Bremssystems eines landwirtschaftlichen Arbeitsfahrzeuges derart weiter zu entwickeln, dass sich das Arbeitsfahrzeug durch einen effizienteren Betrieb und ein verbessertes Bremsverhalten auszeichnet.

Diese Aufgabe wird erfindungsgemäß durch ein landwirtschaftliches Arbeitsfahrzeug gemäß dem Anspruch 1 sowie ein Verfahren zum Betreiben eines landwirtschaftlichen Arbeitsfahrzeuges gemäß dem unabhängigen Anspruch 11 gelöst.

Vorteilhafte Weiterbildungen sind Gegenstand der hiervon abhängigen Unteransprüche.

Gemäß dem Anspruch 1 wird ein landschaftliches Arbeitsfahrzeug vorgeschlagen, mit einer Vorrichtung für eine Aufnahme eines Anbaugerätes und einer Einrichtung für eine Aufnahme von Kontergewichten, sowie einem zumindest zwei Achsen umfassenden Fahrwerk, einer Vorderachse und einer Hinterachse, an denen Drehmomentübertragungsmittel angeordnet sind, und mit einem durch eine Steuereinrichtung ansteuerbaren Bremssystem, welches wenigstens eine auf zumindest eine der Achsen bzw. die daran angeordneten Drehmomentübertragungsmittel einwirkende Bremseinrichtung umfasst. Unter Drehmomentübertragungsmittel werden Reifen oder Raupenfahrwerke verstanden, welche jeweils ausschließlich oder in Kombination miteinander an den Achsen angeordnet sein können. Um einen möglichst effizienten Betrieb des landschaftlichen Arbeitsfahrzeuges zu erreichen, wird erfindungsgemäß vorgeschlagen, dass die Steuereinrichtung dazu eingerichtet ist, in Abhängigkeit von zumindest einer anbaugerätespezifischen Eigenschaft, welche durch die Steuereinrichtung anhand einer bereitgestellten Information über den Anbaugerätetyp ermittelbar ist, einen von dem Bremssystem an der Vorderachse bereitgestellten maximalen Bremsdruck und/oder einen Bremsdruckverlauf anzupassen. Dies hat den Vorteil, dass das Bremssystem die Bremsleistung bedarfsabhängig, das heißt an das tatsächliche Gesamtgewicht von Arbeitsfahrzeug und dem jeweiligen daran angeordneten Anbaugerät angepasst, bereitstellt. Im Unterschied zu dem aus der DE 10 2014 105 758 A1 bekannten Bremssystem ist erfindungsgemäß eine bedarfsorientierte Breitstellung des Bremsdruckes vorgesehen, welche sicherstellt, dass das Arbeitsfahrzeug mit dem daran angeordneten Anbaugerät innerhalb eines gesetzlich vorgegebenen Bremsweges zum Stehen kommt. Die erfindungsgemäße Ansteuerung des Bremssystems durch die Steuereinrichtung erfolgt dabei sowohl bei Feldfahrt als auch bei Straßenfahrt, wenn ein Anbaugerät an dem Arbeitsfahrzeug angeschlossen ist.

Die Bereitstellung von Informationen über den Anbaugerätetyp kann auf unterschiedliche Weise erfolgen. Eine bevorzugte Möglichkeit besteht darin, dass beim Anschließen des Anbaugerätes an das Arbeitsfahrzeug der Anbaugerätetyp durch die Steuereinrichtung automatisch ermittelt wird. Die Bereitstellung von Informationen über den Anbaugerätetyp kann darüber hinaus anhand einer manuellen Eingabe durch eine Bedienperson erfolgen, wenn diese beispielsweise nicht automatisiert ermittelbar sind. Auf diese Weise lassen sich gleiche Bremswege des landschaftlichen Arbeitsfahrzeuges bei unterschiedlichen Anbaugerätetypen darstellen. Die bedarfsabhängige Bereitstellung der Bremsleistung führt zu einer verminderten Blockierneigung der Vorderachse, was mit einer verbesserten Kontrollierbarkeit und einem stabileren Fahrverhalten des Arbeitsfahrzeugs während eines Bremsvorganges einhergeht.

Insbesondere kann die Steuereinrichtung dazu eingerichtet sein, den bereitgestellten maximalen Bremsdruck mit zunehmendem Gewicht des Anbaugerätes zu erhöhen. So nimmt mit zunehmendem Gewicht des Anbaugerätes die negative Beschleunigung je Zeiteinheit zu.

Hierzu kann das Bremssystem ein lastabhängiges Bremsventil umfassen. Mittels des lastabhängigen Bremsventils lässt sich ein spezifischer Bremsdruck einstellen, welcher sich aus dem Gewicht des Arbeitsfahrzeugs und dem des daran angeordneten Anbaugerätes bestimmen lässt. Das heißt, das lastabhängige Bremsventil ist in Abhängigkeit von der Maschinenlast einstellbar. Somit kann die Vorderachse in Abhängigkeit von dem aufgenommenen Anbaugerät unterschiedlich stark gebremst werden, wobei sich der jeweils resultierende Bremsweg stets innerhalb der gesetzlich vorgegeben Bremswege befindet, innerhalb der das Arbeitsfahrzeug zum Stillstand kommen muss. Das lastabhängige Bremsventil kann als Stetigventil, insbesondere als Proportionalventil, ausgeführt sein.

Eine vorteilhafte Weiterbildung sieht vor, dass die Steuerungseinrichtung dazu eingerichtet ist, in Abhängigkeit von dem Anbaugerätetyp und der zumindest einen anbaugerätespezifischen Eigenschaft das aufzunehmende Kontergewicht zu bestimmen. Eine an das jeweilige Anbaugerät angepasste Anordnung von Kontergewichten führt zu einer geringeren Ballastierung am Arbeitsfahrzeug. Das für den jeweiligen Anbaugerätetyp spezifische, am Arbeitsfahrzeug anzuordnende Kontergewicht kann einer Bedienperson durch die Steuereinrichtung zur Kenntnis gebracht werden, damit dies beim Ausrüsten des Arbeitsfahrzeugs Berücksichtigung finden kann. Dies führt zu einer Reduzierung des Gesamtgewichts des Arbeitsfahrzeugs, was mit einem geringeren Kraftstoffverbrauch einhergeht. Zweckmäßigerweise kann die wenigstens eine Bremseinrichtung als Reibungsbremse ausgeführt, wobei zumindest jedem der Drehmomentübertragungsmittel zumindest einer der Achsen eine Reibungsbremse zugeordnet ist. So können jedem der Drehmomentübertragungsmittel der sowohl der Vorderachse als auch der zumindest einen weiteren Hinterachse Reibungsbremsen zugeordnet sein. Bei den Reibungsbremsen kann es sich um Lamellenbremsen, Scheibenbremsen oder Trommelbremsen handeln.

Weiterhin kann zumindest einer der Achsen des Arbeitsfahrzeugs ein hydrostatischer Fahrantrieb zugeordnet sein, der zur teilweisen oder vollständigen Erzeugung einer Bremswirkung eingerichtet ist. Durch den hydrostatischen Fahrantrieb kann eine Bremswirkung ganz oder teilweise durch die Druckdifferenz im hydrostatischen Kreislauf des Fahrantriebs erzeugt werden. Auf diese Weise ließe sich eine reinhydrostatische Bremseinrichtung realisieren, welche ohne eine Reibungsbremse als Betriebsbremse auskäme.

Bevorzugt kann die Steuereinrichtung dazu eingerichtet sein, einen Hydraulikmotor oder eine Hydraulikpumpe des hydrostatischen Fahrantriebes zur Erzeugung einer zumindest zusätzlichen Bremskraft in Abhängigkeit von zumindest einer anbaugerätespezifischen Eigenschaft anzusteuern. Hierdurch lässt sich die Bremswirkung der Reibungsbremsen an der Vorderachse und/oder Hinterachse lastabhängig unterstützen. Alternativ kann die Bremskraft von dem wenigstens einen Hydraulikmotor oder der wenigstens einen Hydraulikpumpe allein erzeugt werden, wobei die Ansteuerung in Abhängigkeit von zumindest einer anbaugerätespezifischen Eigenschaft erfolgt.

Des Weiteren kann die Steuereinrichtung dazu eingerichtet sein, einen an der Hinterachse und/oder einer dem Arbeitsfahrzeug zugeordneten Zusatzachse von dem Bremssystem bereitgestellten maximalen Bremsdruck in Abhängigkeit von der zumindest einen anbaugerätespezifischen Eigenschaft anzupassen. Bei der Zusatzachse kann es sich um eine dritte Achse des Arbeitsfahrzeugs oder um eine an dem Anbaugerät angeordnete Achse handeln. Die Zusatzachse weist ebenfalls Bremseinrichtungen auf, die von dem Bremssystem in erfindungsgemäßer Weise mit einem Bremsdruck beaufschlagbar sind.

Insbesondere kann eine weitere anbaugerätespezifische Eigenschaft eine am Anbaugerät befindliche Abstützanordnung sein. Die Abstützanordnung kann Stützräder oder Kufen umfassen, welche in das Anbaugerät integriert sind oder mittels einer Anbauvorrichtung an dem Anbaugerät angebracht werden. Letztere Anordnung der Abstützanordnung mittels der Anbauvorrichtung kommt bei einer Straßenfahrt des Arbeitsfahrzeugs zum Tragen. Da das Vorhandensein einer Abstützanordnung an dem Anbaugerät unter anderem dazu dient, die Achse zu entlasten, zu welcher das Anbaugerät benachbart angeordnet ist, in der Regel die Vorderachse, beeinflusst dies ebenfalls die erforderliche Bremsleistung.

Bevorzugt kann das landwirtschaftliche Arbeitsfahrzeug als Traktor, selbstfahrender Mähdrescher oder Feldhäcksler ausgeführt sein.

Weiterhin wird die Aufgabe durch ein Verfahren zum Betreiben eines landwirtschaftlichen Arbeitsfahrzeugs, insbesondere eines Feldhäcksler, gelöst. Das landwirtschaftliche Arbeitsfahrzeug umfasst eine Vorrichtung, von der ein Anbaugerät aufgenommen wird, und eine Einrichtung, von der Kontergewichte aufgenommen werden, sowie ein zumindest zwei Achsen umfassendes Fahrwerk, einer Vorderachse und einer Hinterachse, an denen Drehmomentübertragungsmittel angeordnet sind, wobei auf die zumindest eine Achse bzw. die daran angeordneten Drehmomentübertragungsmittel durch ein Bremssystem eingewirkt wird, welches durch eine Steuereinrichtung angesteuert wird. Erfindungsgemäß wird in Abhängigkeit von zumindest einer anbaugerätespezifischen Eigenschaft, welche durch die Steuereinrichtung anhand einer bereitgestellten Information über den aufgenommenen Anbaugerätetyp ermittelt wird, ein von dem Bremssystem zumindest an der Vorderachse bereitgestellter maximalen Bremsdruck und/oder ein Bremsdruckverlauf angepasst, so dass mit zunehmender Masse des Anbaugerätes die Bremswirkung zunimmt.

Die Bereitstellung über den aufgenommenen Anbaugerätetyp wird beim Anschließen des Anbaugerätes an das Arbeitsfahrzeug durchgeführt. Dies kann automatisch durch das Erkennen des Anbaugerätes erfolgen, beispielsweise durch die Übermittlung von Daten durch das Anbaugerät an die Steuereinrichtung des Arbeitsfahrzeugs die eine Identifikation des Anbaugerätetyps ermöglichen bzw. durch das Auslesen eines am Anbaugerät vorgesehenen Speichers, der für das Anbaugerät spezifische Daten vorhält. Selbstverständlich können diese Daten auch manuell von einer bedient Person des Arbeitsfahrzeugs durch eine Eingabe-Ausgabevorrichtung eingegeben werden. Insbesondere wird als anbaugerätespezifische Eigenschaft das Gewicht des Anbaugerätes ermittelt, welches in Verbindung mit dem Gewicht des Arbeitsfahrzeugs bei der Anpassung des an der Vorderachse bereitgestellten maximalen Bremsdruckes zugrunde gelegt wird.

Dabei kann in Abhängigkeit von dem Anbaugerätetyp und der damit verbundenen zumindest einen anbaugerätespezifischen Eigenschaft das aufzunehmende notwendige Kontergewicht bestimmt und angezeigt werden. Hierzu kann die Steuereinrichtung mit einer Eingabe-Ausgabeeinrichtung in signaltechnischer Verbindung stehen welche in einer Kabine des Arbeitsfahrzeugs angeordnet ist.

Insbesondere kann mit zunehmendem Gewicht des jeweiligen angebauten Anbaugerätes der maximal zur Verfügung stehende Bremsdruck an der Vorderachse in der Weise geändert werden, dass die Bremswirkung zunimmt.

Bevorzugt kann zur Veränderung des maximal bereitgestellten Bremsdrucks zumindest ein lastabhängiges Bremsventil angesteuert werden.

Zudem kann zur Erzeugung einer zusätzlichen Bremswirkung das Schluckvolumen eines Hydromotorsund/oder einer Hydropumpe eines hydraulischen Fahrantriebes in Abhängigkeit von der zumindest einen anbaugerätespezifischen Eigenschaft verändert werden.

Die vorliegende Erfindung wird nachstehend anhand eines in den Zeichnungen dargestellten Ausführungsbeispieles näher erläutert.

Es zeigen:
- Fig. 1: eine schematische Darstellung eines landwirtschaftlichen Arbeitsfahrzeugs mit daran angeordnetem Anbaugerät;
- Fig. 2: eine schematische Darstellung eines Fahrwerks einer erfindungsgemäßen Erntemaschine;
- Fig. 3: eine Grafik mit verschiedenen Bremskraftverläufen.

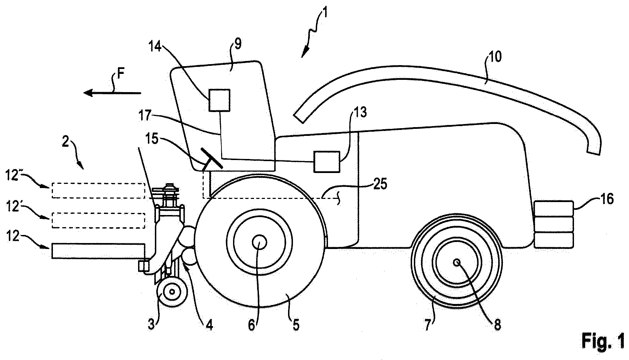

Fig. 1 zeigt eine schematische Darstellung eines landwirtschaftlichen Arbeitsfahrzeugs mit daran angeordnetem Anbaugerät 2. Das landwirtschaftliche Arbeitsfahrzeug ist als ein Feldhäcksler 1 ausgeführt. Das Anbaugerät 2 ist in dem dargestellten Ausführungsbeispiel klappbar ausgeführt, um die für eine Straßenfahrt zulässige maximale Breite nicht zu überschreiten. Entsprechend wird das Anbaugerät 2 im Erntebetrieb ausgeklappt. Grundsätzlich umfasst der Begriff Anbaugerät jedes an einem landwirtschaftlichen Arbeitsfahrzeug anbringbare Anbau- bzw. Vorsatzgerät, unabhängig davon, ob es zusammenklappbar ist oder nicht. Weiterhin umfasst das Vorsatz- bzw. Anbaugerät 2 integrierte Stützräder 3, welche das Anbaugerät 2 gegenüber dem Boden abstützen. Die von den Stützräder 3 aufgebrachte Stützkraft kann durch jeweils einen Aktor einstellbar sein. Der in Seitenansicht gezeigte Feldhäcksler 1 wird durch an einer Vorderachse 6 angeordnete vordere Hauptantriebsräder 5 angetrieben und durch an einer Hinterachse 8 angeordnete lenkbare hintere Räder 7 gelenkt. Die hinteren Räder 7 können ebenfalls angetrieben sein. Die Vorderräder und/oder Hinterräder des dargestellten Feldhäckslers können auch als Band-, Raupen- oder Kettenlaufwerke ausgeführt sein. Die nachfolgenden Erläuterungen gelten in diesem Fall auch entsprechend.

Im vorderen Bereich ist eine Einzugseinrichtung 4 vorgesehen, durch welche das Erntegut in das Innere des Feldhäckslers 1 eingezogen wird. Das Erntegut gelangt von der Einzugseinrichtung 4 durch nicht dargestellte Verarbeitungseinrichtungen für das Erntegut, insbesondere einer Häckselvorrichtung, einer optionalen Konditioniereinrichtung sowie einer Nachbeschleunigungseinrichtung, zu einer Auswurfeinrichtung 10, die hinter einer Fahrerkabine 9 angeordnet ist. Die Auswurfeinrichtung 10 fördert das Erntegut in einen neben oder hinter dem Feldhäcksler 1 mitgeführten Anhänger, welcher beispielsweise von einem Traktor gezogen wird.

An der Einzugseinrichtung 4 sind Mittel vorgesehen, an welchen das Anbaugerät 2 eingehängt werden kann. Ein Hauptrahmen des Anbaugeräts 2 verläuft in die Bildebene hinein bzw. heraus und somit quer, d.h. um einen Winkel von etwa 90° versetzt, zur Fahrtrichtung F des Fahrzeugs 1. Das klappbare Anbaugerät 2 weist eine mittlere Sektion 12 und äußere Sektionen 12', 12" auf. Mit Strichlinien sind die äußeren Sektionen 12', 12" in der Transportstellung des Anbaugerätes 2 eingezeichnet.

Weiterhin umfasst der Feldhäcksler 1 eine Steuereinrichtung 13, welche der Ansteuerung eines Bremssystems des Feldhäckslers 1 dient. Die Steuereinrichtung 13 steht durch eine Signal- und Steuerleitung 17 mit einer Eingabe-Ausgabevorrichtung 14 in der Kabine 9 in Verbindung. Weiterhin ist in der Kabine 9 ein Bremspedal 15 angeordnet, welches von einer Bedienperson betätigt wird, um den Feldhäcksler 1 zum Stillstand zu bringen. Das Bremspedal 15 ist ebenfalls durch eine Signal- und Steuerleitung 17 mit der Steuereinrichtung 13 verbunden. Im Heckbereich des Feldhäckslers 1 sind Kontergewichte 16 angeordnet, welche der Ballastierung dienen. Die Kontergewichte 16 sorgen für eine entsprechende Belastung der Hinterachse 8, um beim Bremsen die Abhebeneigung des Feldhäcksler 1 zumindest zu reduzieren. Gleichzeitig kann durch die Ballastierung die Vorderachse 6 entlastet werden.

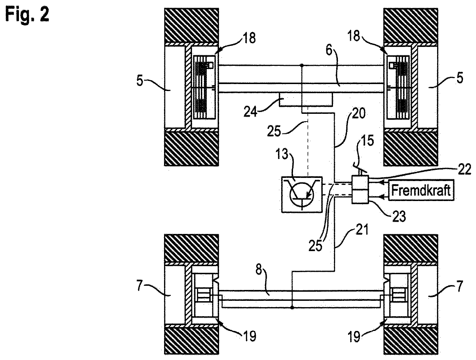

Fig. 2 ist eine schematische Darstellung eines Fahrwerks des Feldhäckslers 1. Durch die Anordnung des Anbaugerätes 2 an der Einzugsvorrichtung 4 liegt der gemeinsame Schwerpunkt von dem Anbaugerät und der Erntemaschine näher an der Vorderachse 6 als an der Hinterachse 8 des Fahrwerks, so dass der Anteil des Gewichts des Feldhäcksler 1, den die Vorderachse 6 trägt, größer ist als der von der Hinterachse 8 getragene Anteil. Um das Gewicht der Maschine auf dem befahrenen Untergrund gleichmäßig zu verteilen, sind daher die Vorderräder 5 größer als die lenkbaren Hinterräder 7. Da der Schwerpunkt der Maschine höher liegt als die Achsen 6, 8, erhöht sich der von der vorderen Achse 1 getragene Anteil am Gewicht noch, wenn die Maschine in der Fahrt verzögert wird.

Jedes Rad 5, 7 ist mit einer als Reibungsbremse ausgeführten Bremseinrichtung 18, 19 versehen, und zwar hier einer - vorzugsweise nassen - Lamellenbremse im Falle der Vorderräder 5 und einer Trommelbremse im Falle der Hinterräder 4. Die Bremseinrichtungen 18 und 19 können jeweils auch als Scheibenbremsen ausgeführt sein. Die Bremseinrichtungen 18 der vorderen Räder 5 und die Bremseinrichtungen 19 der hinteren Räder 7 gehören zwei voneinander getrennten Bremskreisen 20, 21 an, die zwar beide durch das gleiche Bremspedal 15 fremdkraftunterstützt gesteuert sind, hierfür aber zwei mittels des Bremspedals 15 betätigte Bremsdruckventile 22, 23 verwenden. Die Bremsdruckventile 22, 23 können unterschiedliche Kennlinien verwenden oder sich hinsichtlich des Ventiltyps unterscheiden, so dass der Zusammenhang zwischen der auf das Bremspedal 15 von einer Bedienperson des Feldhäcksler 1 ausgeübten Betätigungskraft und dem daraus resultierenden Bremsdruck in den Bremskreisen 20 bzw. 21 unterschiedlich ist.

Der als Triebachse ausgeführten Vorderachse 6 ist zumindest ein Hydromotor 24 (Hydraulikmotor) zugeordnet, der Teil eines hydrostatischen Fahrantriebes des Feldhäckslers 1 ist. Der zumindest eine Hydromotor 24 ist mit einer nicht dargestellten Hydropumpe hydraulisch verbunden, deren Schluckvolumen veränderbar ist. Der Hydromotor 24 als auch die Hydropumpe können jeweils als mit einer Schwenkscheibe versehene Einheit ausgebildet sein, d.h. als verstellbarer Axialkolbenmotor bzw. verstellbare Axialkolbenpumpe. Zumindest das Bremsdruckventil 22 des Bremskreises 20 der Vorderachse 6 ist als Stetigventil ausgebildet. Die Bremsdruckventile 22 und 23 sowie der Hydromotor 24 sind durch Signal- und Steuerleitungen 25 mit der Steuereinrichtung 13 verbunden.

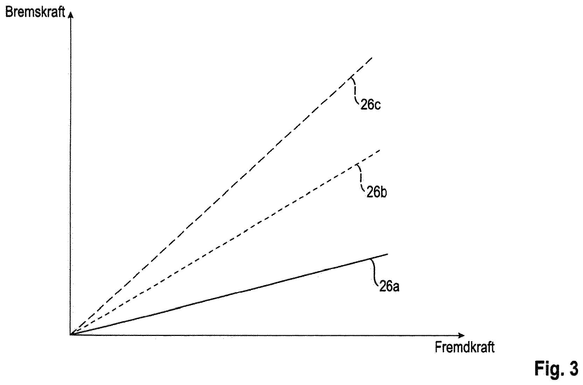

In Fig. 3 ist eine Grafik gezeigt, welche den Zusammenhang zwischen der auf das Bremspedal 15 aufgebrachten Fremdkraft und der von dem Bremssystem erzeugten Bremskraft beispielhaft darstellt, wenn erfindungsgemäß das Bremssystem in Abhängigkeit von einer anbaugerätespezifischen Eigenschaft, insbesondere dem Gewicht des jeweiligen Anbaugerätes 2, durch die Steuereinrichtung 13 entsprechend angesteuert wird. Die Grafik zeigt exemplarisch drei Verläufe 26a, 26b und 26c einer Bremskraft, wobei der Bremskraftverlauf 26a beispielhaft für ein Anbaugerät 2 steht, welche sich durch ein geringes Gewicht auszeichnet, der Bremskraftverlauf in 26b charakteristisch ist für ein Anbaugerät 2 mit einem mittleren Gewicht sowie der Bremskraftverlauf 26c, welches sich bei Anbaugeräten 2 mit einem hohen Gewicht einstellt. Das jeweilige Gewicht des Anbaugerätes 2 wird insbesondere durch dessen Arbeitsbreite bestimmt. Vorteilhaft ist der proportionale Bremskraftverlauf in Abhängigkeit von der jeweiligen Kombination aus Arbeitsfahrzeug 1 und Anbaugerät 2. Die Anpassung der Bremskraft in Abhängigkeit insbesondere vom Gewicht des Anbaugerätes 2 gestattet es, gleiche Bremsweglängen bei unterschiedlichen Gesamtmaschinengewichten darzustellen. In der Steuereinrichtung 13 ist eine Vielzahl von Bremskraftverläufen abrufbar hinterlegbar. Die Bremskraftverläufe 26a, 26b, 26c sind anpassbar.

Die Bestimmung der anbaugerätespezifischen Eigenschaft erfolgt durch die Steuereinrichtung 13 anhand einer bereitgestellten Information über den Anbaugerätetyp. Hierzu kann zumindest der Anbaugerätetyp von der Bedienperson mittels der Eingabe-Ausgabevorrichtung 14 manuell eingegeben werden. Die bereitgestellte Information über den Anbaugerätetyp wird von der Steuereinrichtung 13 verwendet, um in einer in einer Speichereinrichtung der Steuereinrichtung 13 hinterlegbaren Datenbank die entsprechenden anbauspezifischen Eigenschaften abzurufen.

Alternativ kann die Steuereinrichtung 13 dazu eingerichtet sein, den Anbaugerätetyp des jeweiligen Anbaugerätes 2 automatisch zu bestimmen, indem beim Anschluss des Anbaugerätes 2 an die Einzugsvorrichtung 4 automatisch ein Datentransfer zwischen dem Anbaugerät 2 und der Steuereinrichtung 13 stattfindet. Die zur Verfügung gestellten anbaugerätespezifischen Eigenschaften beschränken sich dabei nicht nur auf das Gewicht des jeweils angebrachten Anbaugerätes 2. Darüber hinaus ist beispielsweise die Arbeitsbreite des Anbaugerätes 2 abrufbar oder eine Information darüber, ob an dem Anbaugerät 2 eine Abstützanordnung wie die Stützräder 3 vorgesehen ist.

Weiterhin ist die Steuereinrichtung 13 dazu eingerichtet, die anbaugerätespezifischen Eigenschaften heranzuziehen, um das Gewicht der heckseitig anzubringenden Kontergewichte 16 zu bestimmen. Diese Information wird von der Steuereinrichtung 13 an die Eingabe-Ausgabevorrichtung 14 übermittelt, sodass diese der Bedienperson das Feldhäcksler 1 abrufbar zur Verfügung steht. Entsprechend kann die Bedienperson die Kontergewichte 16 an das tatsächliche Gewicht des Anbaugerätes 2 anpassen, was zu einer Reduzierung des Gesamtgewichts der Einheit aus Feldhäcksler 1 und Anbaugerät 2 führt. Dies führt, neben einer Kraftstoffersparnis durch das geringere Gesamtmaschinengewicht, zu einer Reduzierung der erforderlichen Bremsleistung bzw. des maximalen Bremsdrucks, der durch das Bremssystem bereitgestellt werden muss.

Im einfachsten Fall erfolgt eine Ansteuerung des Bremssystems durch die Steuereinrichtung 13 in Abhängigkeit von der anbaugerätespezifischen Eigenschaft nur für das Bremsdruckventil 22, welches in dem Bremskreis 20 der Vorderachse 6 angeordnet ist. Hierzu sind in der Steuereinrichtung 13 entsprechende Abhängigkeiten hinterlegt, damit in Abhängigkeit von dem erkannten Anbaugerät ein vorbestimmter maximaler Bremsdruck durch das Bremsdruckventil 22 eingestellt wird. Entsprechend wird die Vorderachse 6 in Abhängigkeit von dem Anbaugerät 2 unterschiedlich stark gebremst.

Eine Weiterbildung sieht vor, dass auch das Bremsdruckventil 23 des Bremskreises 21 der Hinterachse 8 durch die Steuereinrichtung in Abhängigkeit von der anbaugerätespezifischen Eigenschaft des Anbaugerätes 2 angesteuert wird.

Ist, wie in Figur 1 dargestellt, das Anbaugerät 2 mit einer als Stützrädern 3 ausgeführten Abstandsanordnung versehen, so kann an den Stützrädern 3 ebenfalls eine Bremseinrichtung angeordnet sein, welche gleichfalls von der Steuereinrichtung 13 in der Findung gemäßer Weise an steuerbar ist.

Ein weiterer Aspekt kann die zumindest lastabhängige Unterstützung der Bremswirkung des Bremssystems durch den oder die Hydromotoren 24 sein. So kann insbesondere bei schweren Anbaugeräten die Bremsleistung des Bremssystems erhöht werden, indem von der Steuereinrichtung 13 die den zumindest einen Hydromotor 24 speisende Hydropumpe in der Weise angesteuert wird, dass das Schluckvolumen der Hydropumpe zumindest verringert wird. Denkbar ist auch, dass der hydrostatische Fahrantrieb zur teilweisen oder vollständigen Erzeugung einer Bremswirkung eingerichtet ist. Entsprechend ist die Steuereinrichtung 13 dazu eingerichtet, den Hydromotor 24 oder eine Hydropumpe des hydrostatischen Fahrantriebes zur Erzeugung einer zusätzlichen Bremskraft in Abhängigkeit von der zumindest einen anbaugerätespezifischen Eigenschaft anzusteuern.

### Bezugszeichenliste

- 1: Feldhäcksler
- 2: Anbaugerät
- 3: Stützrad
- 4: Einzugseinrichtung
- 5: Vorderrad
- 6: Vorderachse
- 7: Hinterrad
- 8: Hinterachse
- 9: Kabine
- 10: Auswurfeinrichtung

- 12: Mittlere Sektion von 2
- 12',12": Äußere Sektion von 2
- 13: Steuereinrichtung
- 14: Eingabe-Ausgabeeinrichtung
- 15: Bremspedal
- 16: Kontergewicht
- 17: Signal- und Steuerleitung
- 18: Bremseinrichtung
- 19: Bremseinrichtung
- 20: Bremskreis
- 21: Bremskreis
- 22: Bremsdruckventil
- 23: Bremsdruckventil
- 24: Hydromotor
- 25: Signal- und Steuerleitung
- 26a: Bremskraftverlauf
- 26b: Bremskraftverlauf
- 26c: Bremskraftverlauf

## Patentansprüche

1. Landwirtschaftliches Arbeitsfahrzeug (1), mit einer Vorrichtung (4) zur Aufnahme eines Anbaugerätes (2) und einer Einrichtung zur Aufnahme von Kontergewichten (16), sowie einem zumindest zwei Achsen umfassenden Fahrwerk, einer Vorderachse (6) und einer Hinterachse (8), an denen Drehmomentübertragungsmittel (5, 7) angeordnet sind, und mit einem durch eine Steuereinrichtung (13) ansteuerbaren Bremssystem, welches wenigstens eine auf zumindest eine der Achsen (6, 8) bzw. die daran angeordneten Drehmomentübertragungsmittel (5, 7) einwirkende Bremseinrichtung (18, 19, 24) umfasst, **dadurch gekennzeichnet, dass** die Steuereinrichtung (13) dazu eingerichtet ist, in Abhängigkeit von zumindest einer anbaugerätespezifischen Eigenschaft, welche durch die Steuereinrichtung (13) anhand einer bereitgestellten Information über den Anbaugerätetyp ermittelbar ist, einen von dem Bremssystem an der Vorderachse (6) bereitgestellten maximalen Bremsdruck und/oder einen Bremsdruckverlauf (26a, 26b, 26c) anzupassen.

2. Landwirtschaftliches Arbeitsfahrzeug (1) nach Anspruch 1, **dadurch gekennzeichnet, dass** die Steuereinrichtung (13) dazu eingerichtet ist, den bereitgestellten maximalen Bremsdruck mit zunehmendem Gewicht des Anbaugerätes (2) zu erhöhen.

3. Landwirtschaftliches Arbeitsfahrzeug (1) nach einem der Ansprüche 1 oder 2, **dadurch gekennzeichnet, dass** das Bremssystem zumindest ein lastabhängiges Bremsdruckventil (22) umfasst.

4. Landwirtschaftliches Arbeitsfahrzeug (1) nach einem der Ansprüche 1 bis 3, **dadurch gekennzeichnet, dass** die Steuereinrichtung (13) dazu eingerichtet ist, in Abhängigkeit von dem Anbaugerätetyp und der zumindest einen anbaugerätespezifischen Eigenschaft das aufzunehmende Kontergewicht (16) zu bestimmen.

5. Landwirtschaftliches Arbeitsfahrzeug (1) nach einem der Ansprüche 1 bis 4, **dadurch gekennzeichnet, dass** die wenigstens eine Bremseinrichtung (18, 19) als Reibungsbremse ausgeführt sind, wobei zumindest jedem der Drehmomentübertragungsmittel (5) einer der Achsen (6, 8) eine Reibungsbremse zugeordnet ist.

6. Landwirtschaftliches Arbeitsfahrzeug (1) nach einem der vorangehenden Ansprüche, **dadurch gekennzeichnet, dass** zumindest einer der Achsen (6, 8) ein hydrostatischer Fahrantrieb zugeordnet ist, der zur teilweisen oder vollständigen Erzeugung einer Bremswirkung eingerichtet ist.

7. Landwirtschaftliches Arbeitsfahrzeug (1) nach Anspruch 6, **dadurch gekennzeichnet, dass** die Steuereinrichtung (13) dazu eingerichtet ist, einen Hydraulikmotor (24) oder eine Hydraulikpumpe des hydrostatischen Fahrantriebes zur Erzeugung einer zusätzlichen Bremskraft in Abhängigkeit von der zumindest einen anbaugerätespezifischen Eigenschaft anzusteuern.

8. Landwirtschaftliches Arbeitsfahrzeug (1) nach einem der vorangehenden Ansprüche, **dadurch gekennzeichnet, dass** die Steuereinrichtung (13) dazu eingerichtet ist, einen von dem Bremssystem an der Hinterachse (8) und/oder einer dem Arbeitsfahrzeug zugeordneten Zusatzachse bereitgestellten maximalen Bremsdruck in Abhängigkeit von der zumindest einen anbaugerätespezifischen Eigenschaft anzupassen.

9. Landwirtschaftliches Arbeitsfahrzeug nach einem der vorangehenden Ansprüche, **dadurch gekennzeichnet, dass** eine weitere anbaugerätespezifische Eigenschaft eine an dem Anbaugerät befindliche Abstützanordnung (3) ist.

10. Landwirtschaftliches Arbeitsfahrzeug (1) nach einem der vorangehenden Ansprüche, **dadurch gekennzeichnet, dass** das landwirtschaftliche Arbeitsfahrzeug als Traktor, selbstfahrender Mähdrescher oder Feldhäcksler ausgeführt ist.

11. Verfahren zum Betreiben eines landwirtschaftlichen Arbeitsfahrzeuges (1), insbesondere eines Feldhäckslers, umfassend eine Vorrichtung (4), von der eine Anbaugerätes (2) aufgenommen wird, und einer Einrichtung, von der Kontergewichte (16) aufgenommen werden, sowie mit einem zumindest zwei Achsen umfassenden Fahrwerk, einer Vorderachse (6) und einer Hinterachse (8), an denen Drehmomentübertragungsmittel (5, 7) angeordnet sind, und mit einem auf zumindest eine der Achsen bzw. die daran angeordneten Drehmomentübertragungsmittel (5, 7) einwirkenden Bremssystem, welches durch eine Steuereinrichtung (13) angesteuert wird, **dadurch gekennzeichnet, dass** in Abhängigkeit von zumindest einer anbaugerätespezifischen Eigenschaft, welche durch die Steuereinrichtung (13) anhand einer bereitgestellten Information über den aufgenommenen Anbaugerätetyp ermittelt wird, ein von dem Bremssystem zumindest an der Vorderachse (6) bereitgestellter maximalen Bremsdruck und/oder ein Bremsdruckverlauf (26a, 26b, 26c) angepasst wird.

12. Verfahren nach Anspruch 11, **dadurch gekennzeichnet, dass** in Abhängigkeit von dem Anbaugerätetyp und der damit verbundenen zumindest einen anbaugerätespezifischen Eigenschaft das aufzunehmende notwendige Kontergewicht (16) bestimmt und angezeigt wird.

13. Verfahren nach einem der Ansprüche 11 oder 12, **dadurch gekennzeichnet, dass** mit zunehmendem Gewicht des jeweiligen angebauten Anbaugerätes (2) der maximal zur Verfügung stehende Bremsdruck an der Vorderachse (6) in der Weise geändert wird, dass die Bremswirkung zunimmt.

14. Verfahren nach einem der Ansprüche 11 bis 13, **dadurch gekennzeichnet, dass** zur Veränderung des maximal bereitgestellten Bremsdrucks zumindest ein lastabhängiges Bremsventil (22) angesteuert wird.

15. Verfahren nach einem der Ansprüche 11 bis 14, **dadurch gekennzeichnet, dass** zur Erzeugung einer zusätzlichen Bremswirkung das Schluckvolumen eines Hydromotors (24) eines hydraulischen Fahrantriebes in Abhängigkeit von der zumindest einen anbaugerätespezifischen Eigenschaft verändert wird.

## Claims

1. An agricultural working vehicle (1), with an apparatus (4) for attaching an implement (2) and a device for attaching counterweights (16), as well as a chassis comprising at least two axles, a front axle (6) and a back axle (8), on which torque transmission means (5, 7) are disposed, and with a braking system which can be controlled by means of a control device (13) and which comprises at least one brake device (18, 19, 24) which acts on at least one of the axles (6, 8) or the torque transmission means (5, 7) disposed thereon, **characterized in that** the control device (13) is configured to adjust a maximum braking pressure and/or a braking pressure profile (26a, 26b, 26c) provided to the front axle (6) by the braking system as a function of at least one characteristic which is specific to the implement which can be determined by means of the control device (13) with the aid of information provided regarding the type of implement.

2. The agricultural working vehicle (1) according to claim 1, **characterized in that** the control device (13) is configured to raise the maximum braking pressure which is provided with increasing weight of the implement (2).

3. The agricultural working vehicle (1) according to claim 1 or claim 2, **characterized in that** the braking system comprises at least one load-dependent braking pressure valve (22).

4. The agricultural working vehicle (1) according to one of claims 1 to 3, **characterized in that** the control device (13) is configured to determine the counterweight (16) to be attached as a function of the type of implement and the at least one characteristic which is specific to the implement.

5. The agricultural working vehicle (1) according to one of claims 1 to 4, **characterized in that** the at least one brake device (18, 19) is configured as a friction brake, wherein a friction brake is associated with at least each one of the torque transmission means (5) of one of the axles (6, 8).

6. The agricultural working vehicle (1) according to one of the preceding claims, **characterized in that** at least one of the axles (6, 8) is associated with a hydrostatic propulsion unit which is configured for partial or complete production of a braking action.

7. The agricultural working vehicle (1) according to claim 6, **characterized in that** the control device (13) is configured to control a hydraulic motor (24) or a hydraulic pump of the hydrostatic propulsion unit in order to produce an additional braking force as a function of the at least one characteristic which is specific to the implement.

8. The agricultural working vehicle (1) according to one of the preceding claims, **characterized in that** the control device (13) is configured to adjust a maximum braking pressure provided by the braking system to the back axle (8) and/or to an additional axle associated with the working vehicle as a function of the at least one characteristic which is specific to the implement.

9. The agricultural working vehicle according to one of the preceding claims, **characterized in that** a further characteristic which is specific to the implement is a bracing unit (3) located on the implement.

10. The agricultural working vehicle (1) according to one of the preceding claims, **characterized in that** the agricultural working vehicle is configured as a tractor, a self-propelled combine harvester or a forage harvester.

11. A method for operating an agricultural working vehicle (1), in particular a forage harvester, comprising an apparatus (4) to which an implement (2) is attached, and a device to which counterweights (16) are attached, as well as with a chassis comprising at least two axles, a front axle (6) and a back axle (8), on which torque transmission means (5, 7) are disposed, and with a braking system which acts on at least one of the axles or on the torque transmission means (5, 7) disposed thereon, which is controlled by means of a control device (13), **characterized in that** a maximum braking pressure and/or a braking pressure profile (26a, 26b, 26c) provided to at least the front axle (6) by the braking system is adjusted as a function of at least one characteristic which is specific to the implement which is determined by means of the control device (13) with the aid of information provided regarding the type of implement which has been attached.

12. The method according to claim 11, **characterized in that** the required counterweight (16) to be attached is determined and displayed as a function of the type of implement and the at least one characteristic which is specific to the implement which is associated therewith.

13. The method according to claim 11 or claim 12, **characterized in that** the maximum braking pressure on the front axle (6) which is available is varied in a manner such that the braking action increases with increasing weight of the respective implement (2) which has been attached.

14. The method according to one of claims 11 to 13, **characterized in that** at least one load-dependent brake valve (22) is controlled in order to vary the maximum braking pressure which is provided.

15. The method according to one of claims 11 to 14, **characterized in that** in order to produce an additional braking action, the displacement volume of a hydrostatic motor (24) of a hydraulic propulsion unit is varied as a function of the at least one characteristic which is specific to the implement.

## Revendications

1. Véhicule de travail agricole (1), avec un dispositif (4) pour loger un appareil rapporté (2) et un système pour loger des contrepoids (16), ainsi qu'avec un train de roulement comprenant au moins deux essieux, un essieu avant (6) et un essieu arrière (8), sur lesquels sont disposés des moyens de transfert de couple de rotation (5, 7), et avec un système de freinage pouvant être piloté par un système de commande (13), lequel comprend au moins un système de freinage (18, 19, 24) agissant sur au moins un des essieux (6, 8) ou sur les moyens de transfert de couple de rotation (5, 7) disposés sur ceux-ci, **caractérisé en ce que** le système de commande (13) est mis au point pour adapter une pression de freinage maximale fournie par le système de freinage à l'essieu avant (6) et/ou une variation de pression de freinage (26a, 26b, 26c) en fonction d'au moins une propriété spécifique à l'appareil rapporté, laquelle peut être déterminée par le système de commande (13) à l'aide d'une information fournie sur le type de l'appareil rapporté.

2. Véhicule de travail agricole (1) selon la revendication 1, **caractérisé en ce que** le système de commande (13) est mis au point pour augmenter la pression de freinage maximale fournie au fur et à mesure que le poids de l'appareil rapporté (2) augmente.

3. Véhicule de travail agricole (1) selon l'une quelconque des revendications 1 ou 2, **caractérisé en ce que** le système de freinage comprend au moins une soupape de pression de freinage (22) dépendant de la charge.

4. Véhicule de travail agricole (1) selon l'une quelconque des revendications 1 à 3, **caractérisé en ce que** le système de commande (13) est mis au point pour définir le contrepoids (16) à absorber en fonction du type de l'appareil rapporté et de l'au moins une propriété spécifique à l'appareil rapporté.

5. Véhicule de travail agricole (1) selon l'une quelconque des revendications 1 à 4, **caractérisé en ce que** l'au moins un système de freinage (18, 19) est réalisé en tant que frein à friction, dans lequel un frein à friction est associé à au moins chacun des moyens de transfert de couple de rotation (5) d'un des essieux (6, 8).

6. Véhicule de travail agricole (1) selon l'une quelconque des revendications précédentes, **caractérisé en ce qu'**est associé à au moins un des essieux (6, 8) un entraînement de déplacement hydrostatique, qui est mis au point pour produire en partie ou en totalité un effet de freinage.

7. Véhicule de travail agricole (1) selon la revendication 6, **caractérisé en ce que** le système de commande (13) est mis au point pour piloter un moteur hydraulique (24) ou une pompe hydraulique de l'entraînement de déplacement hydrostatique pour produire une force de freinage supplémentaire en fonction de l'au moins une propriété spécifique à l'appareil rapporté.

8. Véhicule de travail agricole (1) selon l'une quelconque des revendications précédentes, **caractérisé en ce que** le système de commande (13) est mis au point pour adapter une pression de freinage maximale fournie par le système de freinage à l'essieu arrière (8) et/ou à un essieu supplémentaire associé au véhicule de travail en fonction de l'au moins une propriété spécifique à l'appareil rapporté.

9. Véhicule de travail agricole selon l'une quelconque des revendications précédentes, **caractérisé en ce qu'**une autre propriété spécifique à l'appareil rapporté est un ensemble de soutien (3) se trouvant sur l'appareil rapporté.

10. Véhicule de travail agricole (1) selon l'une quelconque des revendications précédentes, **caractérisé en ce que** le véhicule de travail agricole est réalisé en tant que tracteur, que moissonneuse-batteuse automotrice ou que ramasseuse-hacheuse.

11. Procédé pour faire fonctionner un véhicule de travail agricole (1), en particulier une ramasseuse-hacheuse, comprenant un dispositif (4), qui loge un appareil rapporté (2), et un système, qui loge des contrepoids (16), ainsi qu'avec un train de roulement comprenant au moins deux essieux, un essieu avant (6) et un essieu arrière (8), sur lesquels sont disposés des moyens de transfert de couple de rotation (5, 7), et avec un système de freinage agissant sur au moins un des essieux ou sur les moyens de transfert de couple de rotation (5, 7), lequel est piloté par un système de commande (13), **caractérisé en ce qu'**une pression de freinage maximale fournie par le système de freinage au moins à l'essieu avant (6) et/ou une variation de pression de freinage (26a, 26b, 26c) sont adaptées en fonction d'au moins une propriété spécifique à l'appareil rapporté, laquelle est déterminée par le système de commande (13) à l'aide d'une information fournie sur le type de l'appareil rapporté logé.

12. Procédé selon la revendication 11, **caractérisé en ce que** le contrepoids (16) nécessaire à loger est défini et affiché en fonction du type de l'appareil rapporté et de l'au moins une propriété spécifique à l'appareil rapporté liée à celui-ci.

13. Procédé selon l'une quelconque des revendications 11 ou 12, **caractérisé en ce que** la pression de freinage maximale disponible est modifiée sur l'essieu avant (6) au fur et à mesure que le poids de l'appareil rapporté (2) installé respectivement augmente de telle manière que l'effet de freinage augmente.

14. Procédé selon l'une quelconque des revendications 11 à 13, **caractérisé en ce qu'**au moins une soupape de freinage (22) dépendant de la charge est pilotée pour modifier la pression de freinage fournie au maximum.

15. Procédé selon l'une quelconque des revendications 11 à 14,
**caractérisé en ce que** le volume d'absorption d'un moteur hydraulique (24) d'un entraînement de déplacement hydraulique est modifié en fonction de l'au moins une propriété spécifique à l'appareil rapporté pour produire un effet de freinage supplémentaire.
